# EUROPÄISCHE PATENTANMELDUNG

(11) **EP 4 302 656 A1**
(43) Veröffentlichungstag der Anmeldung: **10.01.2024**
(21) Anmeldenummer: 23183662.8
(22) Anmeldetag: 05.07.2023
(51) Int. Cl.: A47G 1/17

(54) **BEFESTIGUNGSSYSTEM**

(30) Priorität: 08.07.2022 DE 102022117132
(71) Anmelder: Gottlieb Binder GmbH & Co. KG, 71088 Holzgerlingen (DE)
(72) Erfinder: HEEPE, Lars, 72072 Tübingen (DE); TRAMSEN, Halvor, 71088 Holzgerlingen (DE); DROTLEF, Dirk-Michael, 75233 Tiefenbronn (DE); PETERSEN, Dennis, 71067 Sindelfingen (DE)
(74) Vertreter: Kohler Schmid Möbus Patentanwälte

(57) **Zusammenfassung**

Befestigungssystem, bestehend zumindest aus
- einem Auftragmittel, das auf eine Oberfläche (12) aufgetragen, insbesondere nach dem Aushärten, eine gegenüber dieser Oberfläche (12) gesehen glatte Anhaftfläche (26) ausbildet, und
- einem Funktionsteil (28), das auf seiner der Anhaftfläche (26) zugewandten Seite eine Funktionsfläche (32) aufweist, die sich an der Anhaftfläche (26) in wieder lösbarer Weise festlegen lässt.

## Beschreibung

Die Erfindung betrifft ein Befestigungssystem. Dahingehende Befestigungssysteme dienen unter anderem dazu, Gebrauchsgegenstände wie Spiegel, Leuchten, Wandhaken, etc. sowie Kunstgegenstände wie Bilder und Gemälde an Wänden eines Gebäudes anzubringen. Als übliche Befestigungsmittel haben sich dabei Nägel und Schrauben bewährt, wobei letztere regelmäßig als Teil des Befestigungssystems über einen in einem Wandbohrloch eingebrachten Dübel zunächst in der Wand befestigt werden, und anschließend über die derart dann geschaffene Aufhängung der Gebrauchs-oder Kunstgegenstand in wieder abnehmbarer Weise an der Wand angebracht wird. Sind dann beispielsweise im Rahmen eines Umzugs die Nägel oder Wanddübel-Befestigungssysteme wieder aus der Wand auszubringen, entstehen häufig unschöne Löcher in der Wand, deren Beseitigung einen entsprechenden Renovierungsaufwand mit sich bringen.

Um diesen Nachteilen zu begegnen, ist zwar in der Praxis bereits vorgeschlagen worden, sogenannte doppelseitig wirkende Klebestreifen zum Einsatz zu bringen, die sich mit ihrer einen Klebeseite an der Wand festlegen lassen und mit ihrer anderen freien, gegenüberliegenden Klebeseite das Festlegen des Gebrauchs- oder Kunstgegenstandes an der Wand erlauben; allein handelt es sich hierbei regelmäßig um bleibende Verbindungen, deren Beseitigen häufig einhergeht mit Beschädigungen an dem an der Wand platzierten Gegenstand und /oder die Wand selbst betreffen, die regelmäßig mit einer Tapete, zumindest aber mit einer Wandfarbe versehen ist, die sich insoweit von der Wand unschön ablösen können. Auch ist die Tragfähigkeit solcher Klebebänder eingeschränkt und zum Hängen schwerer Gegenstände wenig geeignet.

Des Weiteren sind im Stand der Technik (EP 1 101 428 A1) einteilige Wand- und Deckenhaken als Befestigungssystem bekannt, der sich zusammensetzt aus einer Basisplatte, die für eine Verklebung mit einem auf Zug entklebenden Streifen einer beidseitig klebenden Klebefolie derart ausgebildet ist, dass ein Anfasser des Klebstreifens die Basisplatte überragt, und einem einen ersten Bogen und einen Gegenbogen aufweisenden Hakenkörper, der auf die dahingehende Basisplatte aufgesetzt ist. Durch entsprechendes Ziehen am Anfasser reduziert sich die Klebkraft des Streifens derart, dass die Verbindung des Hakens zur Wand oder Decke rückstandsfrei gelöst werden kann. Zwar steht der Haken zur wiederholten Verklebung zur Verfügung; allein die Größe des Hakens limitiert insoweit auch die Größe der zum Einsatz kommenden beidseitig klebenden Klebfolie und damit die Einsatzmöglichkeiten.

Ausgehend von diesem Stand der Technik liegt der Erfindung die Aufgabe zugrunde, ein demgegenüber verbessertes Befestigungssystem zu schaffen, das sich rückstandsfrei wieder entfernen und/oder überstreichen lässt, ohne andere Gegenstände nachteilig zu beeinflussen und dabei auch die Realisierung großer Festlegeflächen ermöglicht.

Eine dahingehende Aufgabe löst ein Befestigungssystem mit den Merkmalen des Patentanspruches 1, bestehend zumindest aus
- einem Auftragmittel, das auf eine Oberfläche aufgetragen, insbesondere nach dem Aushärten, eine gegenüber dieser Oberfläche gesehen glatte Anhaftfläche ausbildet, und
- einem Funktionsteil, das auf seiner der Anhaftfläche zugewandten Seite eine Funktionsfläche aufweist, die sich an der Anhaftfläche in wieder lösbarer Weise festlegen lässt.

Die Grundidee des erfindungsgemäßen Befestigungssystems besteht mithin darin, eine raue Oberfläche, wie sie beispielsweise durch die Wände eines Gebäudes vorgegeben ist, zu egalisieren, indem ein auf die Wand zusätzlich von außen aufgebrachtes Auftragmittel nach dem Aushärten aufgrund seiner materialspezifisch inhärenten Oberflächenspannung eine gegenüber der rauen Wand glättere Anhaftfläche ausbildet. Die entstandene Rauheit der glätteren Anhaftfläche kann nach Haytam Kasern und Michael Varenberg (Effect of counterface roughness on adhesion of mushroom-shaped microstructure; Journal of the Royal Society Interface; 2013) durch ein integratives Rauheitsmaß beschrieben werden, welches kleiner gleich 75 *µ*m² sein sollte. Dergestalt ist das Befestigungsmittel besonders geeignet für das nachträgliche Anbringen an unverputztem, gegebenenfalls nur gestrichenem Mauerwerk, rauen Betonwänden, Kacheln und auf Rauputz; aber auch für Tapeten, wie Raufasertapeten, mit entsprechenden Oberflächen-Unebenheiten, wobei eventuell mehrfach ein (Sprüh)auftrag mit dem Auftragmittel vorab vorgenommen werden muss. Nach Herstellen der glatten Anhaftfläche kommt als weiteres Teil des Befestigungssystems anschließend ein Funktionsteil zum Einsatz, das auf seiner der ausgehärteten Anhaftfläche zugewandten Seite eine Funktionsfläche aufweist, die sich an der Anhaftfläche in wieder lösbarer Weise festlegen lässt, was bevorzugt durch Adhäsion erfolgt, bei der regelmäßig unter Einsatz von sogenannten Van-der-Waals-Kräften eine "klebende" Verhaftung der Funktionsfläche mit der Anhaftfläche auf der Oberfläche einer Gebäudewand erfolgt. Auf der der Funktionsfläche abgewandten Seite des Funktionsbauteils kann eine vorzugsweise frei gehaltene Fläche, die mit einem Klebstoff versehen werden kann, dem Anbringen weiterer Befestigungskomponenten, wie einem Befestigungshaken, dienen.

Das Auftragmittel kann an der Anhaftfläche eine geringere Rauheit aufweisen als die Oberfläche.

Das Auftragmittel ist vorzugsweise in Form eines Sprühauftrags aufgetragen. Das Auftragmittel kann in Form eines aufgesprühten Sprühpflasters aufgetragen sein.

Das Auftragmittel kann in Form eines Klebebands ausgebildet sein. Das Klebeband kann eine Kunststofffolie aufweisen, die einseitig dünn mit Klebmasse beschichtet ist. Die Kunststofffolie kann insbesondere aus Polyethylenterephthalat (PET) und/oder - aus Entsorgungsgründen bevorzugt - Polypropylen (PP) und/oder Polyethylen (PE) ausgebildet sein. Als Klebmasse kommen bevorzugt ein Acrylat, Hotmelt und/oder Kautschuk in Betracht. Das Klebeband kann durch ein - insbesondere anisotropes - Textilgewebe verstärkt sein.

Bei einer bevorzugten Ausführungsform des erfindungsgemäßen Befestigungssystems wird das Auftragmittel in flüssiger Form auf die Oberfläche aufgetragen. Das heißt, eine raue Oberfläche wird mit einer flüssigen, aushärtenden Substanz besprüht, sodass die kritischen Rauheitswellenlängen eliminiert werden. Die Flüssigkeit kann auch aufgepinselt, aufgetupft, gerakelt, durch Streichen und dergleichen mehr auf die raue Oberfläche aufgebracht werden.

Vorzugsweise ist dabei vorgesehen, dass das Auftragmittel nach dem Aushärten auch wieder rückstandsfrei von der Oberfläche entfernbar ist. Alternativ besteht die Möglichkeit das Auftragmittel mit einem Farbaufstrich, der vorzugsweise einer benachbarten Farbanordnung an der Wand entspricht, zu überstreichen. Dergestalt kann bei einem Fehlauftrag an der falschen Stelle der dahingehende Auftrag unmittelbar wieder rückgängig gemacht werden und mit geringem Aufwand an anderer Stelle erneut ein Auftragvorgang veranlasst werden. Ferner lässt sich eine nicht mehr benötigte Befestigung, ohne Beschädigungen an Dritt-Komponenten vollständig entfernen.

Als besonders vorteilhaft hat es sich für das Befestigungssystem erwiesen, wenn die Funktionsfläche des Funktionsteils mikrostrukturiert ist, wobei vorzugsweise die Funktionsfläche des Funktionsteils aus 15 000 bis 55 000, besonders bevorzugt aus 25 000 bis 35 000, sogenannter Haftelemente pro cm² Funktionsfläche gebildet ist.

Dabei besteht das folienartige Funktionsteil aus einem Silikonmaterial, das sich im Rahmen üblicher Mikroreplikationsverfahren gut verarbeiten lässt, beispielsweise unter Einsatz eines sogenannten Chill-Roll-Verfahrens.

Dadurch, dass das Funktionsteil bevorzugt folienartig ausgebildet ist, lässt es sich platzsparend bevorraten, beispielsweise dergestalt aufrollen, dass man mittels einer üblichen Haushaltsschere vor Ort das Funktionsteil passgenau ausgeschnitten für einen Einsatz zur Verfügung stellen kann. Alternativ kann das Funktionsteil aus einzelnen Patches bestehen, die bereits vorher auf ein entsprechendes Maß zugeschnitten sind.

Bei einer besonders bevorzugten Ausführungsform des erfindungsgemäßen Befestigungssystems ist vorgesehen, dass das flüssige, schnell aushärtende Auftragmittel jeweils einzeln oder in Kombination
- acrylat-
- silikon-
- polyurethan-
- kautschuk-
- lack-
- cellulose-
basiert ist. Die dahingehenden Auftragmittel lassen sich insbesondere im Rahmen eines Sprühauftragverfahrens auch dann aufbringen, wenn eventuell die zugrunde liegende raue Oberfläche Verschmutzungspartikel aufweist, wie üblichen Hausstaub.

Besonders bevorzugt kommt ein Verkaufsset zum Einsatz, zumindest bestehend aus mindestens einer Sprüheinrichtung zum Aufträgen eines flüssigen, aushärtenden Auftragmittels und aus mindestens einem folienartigen Funktionsteil mit einer Funktionsfläche mit Mikrostrukturen. Das Verkaufsset kann um weitere Funktionskomponenten ergänzt sein, beispielsweise in Form eines auf das Funktionsteil aufzuklebenden Befestigungshakens. Alle Bestandteile des Verkaufssets sind in einem, vorzugsweise durchsichtigen Folienbeutel aufgenommen. Hierfür ist das Funktionsteil auf seiner der Funktionsfläche mit den Mikrostrukturen abgewandten Rückseite selbstklebend ausgebildet oder weist eine Rückenschicht auf, beispielsweise in Form einer, vorzugsweise fluorierten, Kunststoff-Folie, die einen zusätzlichen anhaftenden Klebstoffauftrag zwischen Funktions- und Befestigungsteil, wie einem Befestigungshaken, ermöglicht.

Zum Anbringen des vorstehend beschriebenen Befestigungsmittels, das sich aus einem Verkaufsset, beispielsweise unter Einsatz eines Folienbeutels, entnehmen lässt, dient ein Verfahren mit zumindest den folgenden Verfahrensschritten:
- Auftragen, insbesondere Aufsprühen, eines, vorzugsweise flüssigen, Auftragmittels auf eine Oberfläche,
- Vorzugsweise Aushärtenlassen des Auftragmittels, insbesondere des Sprühauftrags, unter Bildung einer glatten Anhaftfläche, und
- Anbringen eines folienartigen Funktionsteils über Mikrostrukturen der einen Funktionsfläche an der Anhaftfläche des ausgehärteten Auftragmittels.

Das derart beschriebene Anbringverfahren braucht nicht auf Anwendungen innerhalb eines Gebäudes eingeschränkt zu sein; vielmehr eignet es sich für alle Anwendungen, bei denen eine Festlegemöglichkeit in Kombination mit rauen Oberflächen hergestellt werden muss. So kann das erfindungsgemäße Befestigungssystem auch dazu dienen, ein folienartiges Funktionsteil auf der Haut eines Patienten in wieder lösbarer Weise anzubringen. So kann auf der Haut des Patienten als rauer Oberfläche ein Sprühauftrag mit einem handelsüblichen Sprühpflaster erfolgen, das auf der Haut des Patienten entsprechend ausgehärtet, eine glatte Oberfläche bildet für das Anbringen der Mikroreplikationsfläche des folienartigen Funktionsteils, das insoweit in wieder lösbarer Weise von dem Sprühpflaster auch wieder abgezogen werden kann. Das folienartige Funktionsteil kann dann beispielsweise im Rahmen einer sogenannten RFID-Technologie mit mindestens einem Transponder versehen sein, auf dem spezifische Patientendaten abgelegt werden können. Darüber hinaus kann die Transpondertechnologie des Funktionsteils eine Überwachung einzelner Patienten ermöglichen, die eventuell im Hinblick auf die Art ihrer Erkrankung zur Desorientierung neigen. Insgesamt lassen sich am Körper tragbare Computertechnologien als sogenannte Wearables mit verschiedenen Übertragungstechnologien, wie Bluetooth, Wifi, RFID etc und einer Vielzahl möglicher Sensoren, wie Temperaturmesseinrichtungen, Leitfähigkeitserfassung der Haut etc mit dem Befestigungssystem verwirklichen, was im Rahmen der Gesundheitsdatenerfassung von Vorteil ist.

Im Folgenden wird das erfindungsgemäße Befestigungssystem anhand von Ausführungsbeispielen nach der Zeichnung näher erläutert. Dabei zeigen in prinzipieller und nicht maßstäblicher Darstellung die
- Figuren 1 bis 4: den Auftragvorgang für ein erfindungsgemäßes Befestigungssystem auf einer rauen Oberfläche in der zeitlichen Abfolge des Auftrags;
- Figur 5: in stark vergrößerter Darstellung das nach der Figur 4 zum Einsatz kommende folienartige Funktionsteil mit einzelnen Mikrostrukturen;
- Figur 6: ein in der Art eines Folienbeutels ausgebildetes Verkaufsset mit Auftragmittel, Funktionsteil und einer weiteren hakenförmigen Funktionskomponente;
- Figur 7: eine Draufsicht auf ein an einem rauen, überstrichenen Mauerwerk angebrachtes Befestigungssystem mit zusätzlich angebrachtem Befestigungshaken auf der Rückseite eines rechteckförmigen Funktionsteils; und
- Figur 8: ein mit Transpondertechnologie ausgerüstetes Befestigungssystem, das auf einer Seite eines menschlichen Handgelenks angebracht ist.

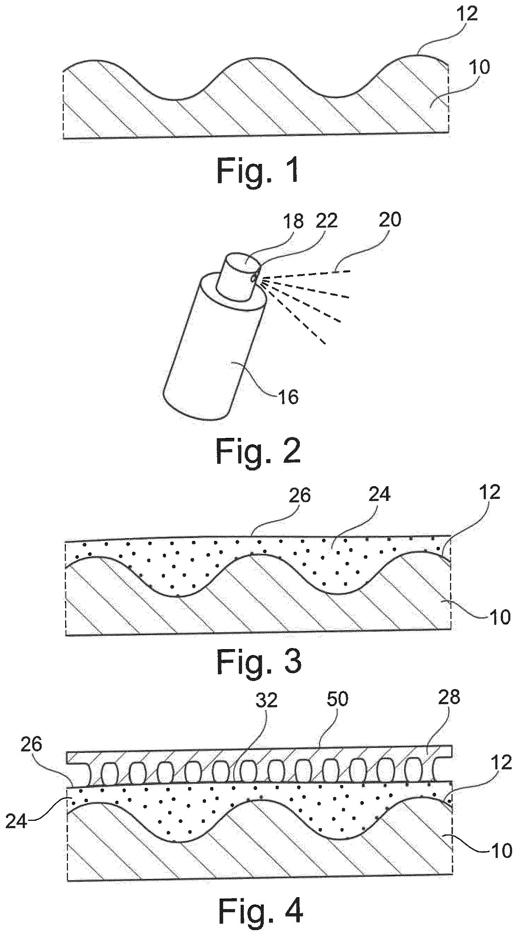

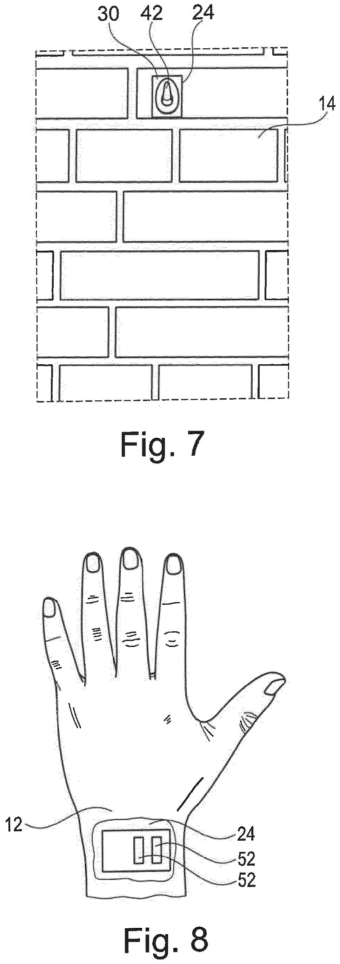

Figur 1 zeigt in schematisch vereinfachter Weise und in starker Vergrößerung eine Seitenansicht auf einen Gegenstand 10 mit einer rauen Oberfläche 12 auf einer freiliegenden Oberseite des Gegenstandes 10. Ein solcher Gegenstand 10 kann beispielhaft durch ein überstrichenes Klinkermauerwerk 14, wie in Figur 7 dargestellt, gebildet sein.

Die Figur 2 zeigt eine marktübliche Sprüheinrichtung 16 im Sprühbetrieb, d.h. durch mehrfaches Drücken eines Sprühknopfes 18 von Hand erfolgt ein flüssiger Sprühaustrag 20 über eine Sprühdüse 22 im Sprühknopf 18. In einer bevorzugten Ausführungsform besteht die dosenartige Sprüheinrichtung 16 aus einer Auftrageinrichtung für Sprühpflaster; es kann aber auch ohne Weiteres ein Rubber Spray zum Aufträgen einer sprühfähigen, synthetischen Gummimischung eingesetzt werden oder eine handelsübliche Lackdose zum Aufbringen eines Fahrzeuglackes, wie eines Autolacks.

Grundsätzlich ist als Sprühauftrag eine Polymer-Lösung geeignet, die nach Verdampfen des Lösungsmittels einen Sprühauftrag 24 auf der rauen Oberfläche 12 gemäß der Darstellung nach der Figur 3 ausbildet, wobei nach Aushärten des Sprühauftrages 24 dieser auf seiner der rauen Oberfläche 12 abgewandten Außenseite eine demgegenüber glatte Anhaftfläche 26 ausbildet. Als Polymermaterial finden u.a. Polyvinylpyrrolidon, Nitrocellulose, Ethylcellulose oder Poly(methylacrylat-isobuten-monoispropylmaleat) (als sogenanntes statisches Copolymer) Verwendung. Als besonders geeignet haben sich aber auch in einer Zubereitung ein oder mehrere Silikon-Acrylat Polymere sowie ein oder mehrere Silikonether mit einem oder mehreren Trägermitteln erwiesen, gewählt aus der Gruppe der bei Raumtemperatur gasförmigen oder flüssigen, linearen, cyclischen oder verzweigten Alkanen oder Alkenen. Die dahingehende Zubereitung für einen Sprühauftrag 24 kann mit flammhemmenden Zusätzen versehen sein und erlaubt eine gute Filmbildung mit glatter Oberfläche sowie eine schnelle Trocknung respektive Aushärten des applizierten Sprühauftragfilms 24.

Ein dahingehend gebildeter Sprühauftrag 24, ebenso wie ein alternativer Sprühauftrag aus Polyurethan oder Kautschuk-Materialien, lässt sich nach dem Aushärten im Bedarfsfall von dem Gegenstand 10 respektive von seiner rauen Oberfläche 12 wieder rückstandsfrei entfernen; anders als im Fall von (Auto)lacken, die permanent anhaftend an dem Gegenstand 10 verbleiben. Insbesondere bei Verwendung der angesprochenen Polymere wird regelmäßig Ethylacetat oder Wasser als Lösungsmittel eingesetzt. Insoweit ist der Sprühauftrag 24 selbsthärtend ausgebildet, wobei das Aushärten, also das Vernetzen unterstützt werden kann durch UV-Licht, Wärmeeintrag und Einbringen zusätzlicher Vernetzer.

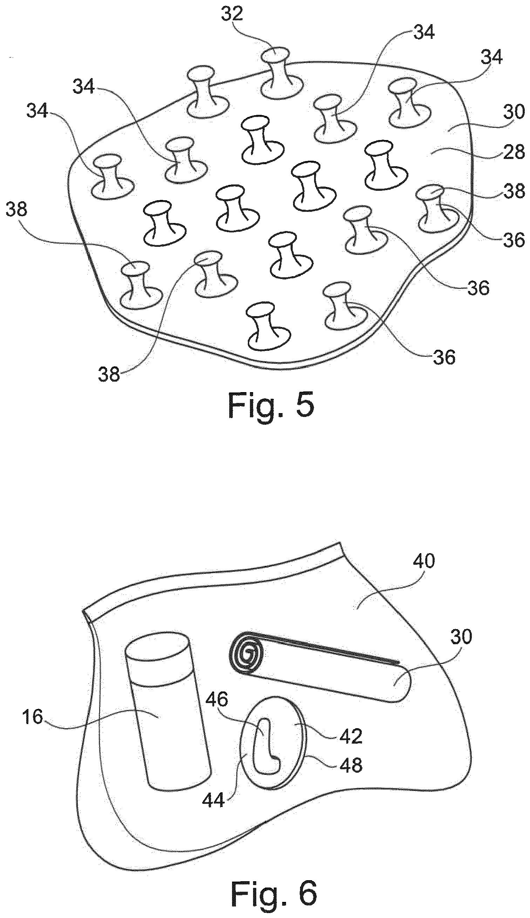

Wie insbesondere die Figur 3 erkennen lässt, lässt sich der Sprühauftrag 24 auch großflächig realisieren und insbesondere besteht auch die Möglichkeit den ausgehärteten, glatten Sprühauftrag 26 farblich zu gestalten, beispielsweise mit einer Wandfarbe zu versehen, die vorzugsweise lackartig ausgebildet möglichst gleichfalls zu einer glatten Anhaftfläche 26 führen sollte. Auch das Auftragmittel selbst kann im Bedarfsfall eine Farbe aufweisen, die in Anpassung an eine sonst eingesetzte Wandfarbe einen weiten Gestaltungspielraum für den Anwender ermöglicht. Insbesondere bei einem großflächigen Auftrag des Auftragmittels besteht die Möglichkeit an einer Stelle mehrere Funktionsteile 28 mit dem ausgehärteten Auftragmittel zu versehen. Ein solches Funktionsteil 28 ist in Figur 5 vergrößert dargestellt. Insbesondere besteht das Funktionsteil 28 aus einer dünnen Folie 30 aus Silikonmaterial, vorzugsweise aus Polyvinylsiloxan. Insbesondere weist die Folie 30 eine Dicke von 0,15 bis 5 mm auf und auf der Folienoberseite als Teil der Funktionsfläche 32 befinden sich 15 000 bis 55 000, besonders bevorzugt 25 000 bis 35 000 Haftelemente 34, pro cm² Folienoberfläche. Die einzelnen Haftelemente 34 sind vorzugsweise allesamt gleich ausgebildet und einstückiger Bestandteil der Folie 30. Jedes Haftelement 34 weist ein Stielteil 36 auf, das fußseitig in die Fläche der Folie 30 übergeht und kopfseitig ein flaches Kopfteil 38 aufweist, das gegenüber dem Stielteil 36 im Durchmesser verbreitert ist. Die ebenen Kopfflächen eines jeden Kopfteiles 38 schließen das Haftelement 34 nach oben hin in einer gemeinsamen Ebene parallel zur Oberfläche der Folie 30 ab und die insoweit gebildeten Mikrostrukturen interagieren über die freie Kopffläche eines jeden Kopfteiles 38 mittels Van-der-Waals-Kräften mit der glatten Anhaftfläche 26 des ausgehärteten auf der Oberfläche 12 flächig aufgetragenen Auftragmittels in Form des Sprühauftrages 24.

Das dahingehende Funktionsteil 28 nach der Figur 5 lässt sich im Rahmen eines sogenannten Chill-Roll-Verfahrens erhalten, wobei die freien Kopfformen auch anders ausgestaltet sein können, beispielsweise anstelle eines Kreisrunds können diese einen hexagonalen Querschnitt ausbilden.

Stellt man die Folie 30 nach der Figur 5 auf den Kopf und bringt man sie in Anlage mit der glatten Anhaftfläche 26, ergibt sich ein Befestigungssystem, wie in Figur 4 dargestellt und die dahingehende Anhaftung erfolgt mittels Adhäsion zwischen den freien Stirnseiten der Haftelemente 34 und der glatten Oberfläche oder Anhaftfläche 26 des Sprühauftrages 24. Nach Überwinden der dahingehenden Adhäsionskraft lässt sich das Funktionsteil 28 auch wieder reversibel von der glatten Anhaftfläche 26 abziehen und im Bedarfsfall lässt sich auch rückstandsfrei wie beschrieben der Sprühauftrag 24 vom Gegenstand 10 mit seiner rauen Oberfläche 12 entfernen. Des Weiteren besteht die Möglichkeit den Sprühauftrag 24 bestehen zu lassen und im Bedarfsfall zu überstreichen.

Wie die Darstellung nach der Figur 6 aufzeigt, kann nun als handelbares Verkaufsset in einem öffenbaren Folienbeutel 40, beispielsweise eine Sprüheinrichtung 16 in Form einer Sprühdose aufgenommen sein zusammen mit einer aufgerollten Folie 30 gemäß der Darstellung nach der Figur 5 und mit einem zusätzlichen Befestigungsmittel, hier in Form eines handelsüblichen Wandhakens 42 aus Kunststoffmaterial. Das folienartige Funktionsteil 28 weist regelmäßig auf seiner mikrostrukturierten Oberfläche wie auf seiner Kleberrückseite eine Schutzfolie auf, was das Aufrollen erschwert, so dass insoweit auch vorgesehen sein kann das Funktionsteil 28 in Form einzelner Patches auszugestalten (nicht dargestellt). Der Wandhaken 42 weist an einer Befestigungsplatte 44 vorstehend das eigentliche Hakenteil 46 auf und rückwärtig ist die Befestigungsplatte 44 mit einem Klebstoffauftrag 48 versehen, der von einer nicht näher dargestellten Kaschierfolie abgedeckt ist. Im dahingehenden Fall weist das Funktionsteil 28 auf seiner der Befestigungsplatte 44 zugewandten Rückseite eine Rückenschicht auf, beispielsweise in Form einer fluorierten Kunststofffolie, vorzugsweise aus PES, PET etc., so dass der Klebstoffauftrag 48 der Befestigungsplatte 44 am Funktionsteil 28 haften bleibt, selbst wenn dieses aus Silikonmaterial besteht, das als besonders klebstoffabweisend gilt. Anstelle dieser Lösung kann das Funktionsteil 28 auch selbstklebend ausgebildet sein, beispielsweise mit Klebstoffen auf Acrylat-, Kautschuk- oder Silikonbasis versehen sein. Die insoweit mittels einer zusätzlichen Abdeckfolie dann freigegebene Klebstoffschicht lässt sich dann ohne Weiteres mit der Befestigungsplatte 44 fest verbinden.

Die Figur 7 zeigt nun beispielhaft eine Anwendung, bei der ein Verkaufsset nach der Figur 6 wie dargestellt zum Einsatz kommen kann.

Zunächst wird das überstrichene Klinkermauerwerk 14 mit einem Sprühauftrag 24 aus der Sprüheinrichtung 16 in Form der Sprühdose versehen. Nach Aushärten des Sprühauftrages 24 auf der rauen Oberfläche 12, was regelmäßig für einen Sprühpflasterauftrag weniger als 1 Minute in Anspruch nimmt, aber bei einem Kautschukauftrag auch mehrere Stunden dauern kann, kann die ausgerollte Folie 30 gegebenenfalls mit einer Schere vor Ort zurechtgeschnitten und gemäß der Darstellung nach der Figur 4 auf die glatte Anhaftfläche 26 aufgesetzt werden. Die bereits angesprochene Adhäsionskraft hält dann die Folie 30 in Anlage mit dem ausgehärteten Sprühauftrag 24 auf dem Mauerwerk 14. Anschließend wird die Kaschierfolie entfernt und der Wandhaken 42 mit seinem rückseitigen Klebstoffauftrag 48 auf die dann freiliegende Oberseite 50 (Figur 4) der Folie 30 aufgeklebt, die dann mit einer zusätzlichen folienartigen Rückenschicht zu versehen ist. Soll der Wandhaken 42 von der Wand 14 wieder entfernt werden, wird dieser zusammen mit der Folie 30 von dem an der Wand ausgehärteten Sprühauftrag 24 durch Abziehen entfernt und anschließend der Sprühauftrag 24 rückstandsfrei von der Oberfläche 12 des Gegenstandes 10, hier in Form des Klinkermauerwerkes 14 abgezogen. Befinden sich im Verkaufsset nach der Figur 6 mehrere solcher Wandhaken 42 bei entsprechender Menge an Folienmaterial 30 sowie noch genügend Sprühmittel in der Sprühdose 6, lässt sich erneut der vorstehend beschriebene Hakenaufbau an einer Gebäudewand 14 durchführen. Es sei an dieser Stelle nochmals betont, dass das Anbringen des Wandhakens 42 nur exemplarisch ist und eine Vielzahl von anderen Anwendungsmöglichkeiten der Befestigung in der Praxis denkbar sind.

Exemplarisch sei in diesem Zusammenhang auf eine medizinische Anwendung nach der Figur 8 verwiesen. Dahingehend lässt sich auf der Handgelenkaußenseite eines Patienten ein Sprühauftrag 24 in Form eines marktüblichen Sprühpflasters aufbringen, wobei die Haut des Patienten hier als die raue Oberfläche 12 anzusehen ist. Es ist selbstredend, dass der Auftrag im Bedarfsfall auch zusätzlich oder alternativ auf der Handgelenkinnenseite aufgebracht werden kann. Nach Aushärten des Sprühpflasters auf der Haut lässt sich dann wiederum die Folie 30 anbringen, die im vorliegenden Anwendungsfall mindestens einen Transponderchip 52 aufweist, mittels dem abrufbare Patientendaten abgelegt werden können oder der es erlaubt den jeweiligen Aufenthaltsort des Patienten zu ermitteln. Die hierfür benötigte RFID-Technologie steht insoweit auch im Bereich der Medizin im Bedarfsfall voll umfänglich zur Verfügung. Auch im dahingehenden Fall lässt sich die Folie 30 problemlos wieder entfernen und der atmungsaktive Sprühpflasterauftrag lässt sich leicht rückstandsfrei abwaschen. Die Folie 30 mit dem jeweiligen Transponder 52 lässt sich dann erneut einsetzen. Andere Lösungen mit solchen Wearables sind möglich.

Eine Vielzahl weiterer Anwendungsmöglichkeiten für das Befestigungssystem sind hier denkbar, was so keine Entsprechung im Stand der Technik hat. So können gemäß der Darstellung nach der Figur 4 als integraler Bestandteil oder als eigenständiges Bauteil auf der nach oben hin freiliegenden Oberfläche des Funktionsbauteils 28 weitere Funktionskomponenten (nicht dargestellt) angebracht werden, wie sie beispielhaft in DE 10 2021 005 460 und DE 10 2020 006 092 offenbart sind.

## Patentansprüche

1. Befestigungssystem, bestehend zumindest aus
- einem Auftragmittel, das auf eine Oberfläche (12) aufgetragen, insbesondere nach dem Aushärten, eine gegenüber dieser Oberfläche (12) gesehen glatte Anhaftfläche (26) ausbildet, und
- einem Funktionsteil (28), das auf seiner der Anhaftfläche (26) zugewandten Seite eine Funktionsfläche (32) aufweist, die sich an der Anhaftfläche (26) in wieder lösbarer Weise festlegen lässt.

2. Befestigungssystem nach Anspruch 1, **dadurch gekennzeichnet, dass** das Auftragmittel in Form eines Klebebands ausgebildet ist.

3. Befestigungssystem nach Anspruch 1, **dadurch gekennzeichnet, dass** das Auftragmittel in flüssiger Form auf die Oberfläche (12) auftragbar ist.

4. Befestigungssystem nach einem der vorhergehenden Ansprüche, **dadurch gekennzeichnet, dass** das Auftragmittel nach dem Aushärten rückstandsfrei von der Oberfläche (12) wieder entfernbar oder überstreichbar ist.

5. Befestigungssystem nach einem der vorstehenden Ansprüche, **dadurch gekennzeichnet, dass** die Funktionsfläche (32) des Funktionsteils (28) mikrostrukturiert ist, und dass die Mikrostrukturen im Wesentlichen mittels Van-der-Waals-Kräften mit der Anhaftfläche (26) des ausgehärteten, auf der Oberfläche (12) flächig aufgetragenen Auftragmittels interagieren.

6. Befestigungssystem nach einem der vorstehenden Ansprüche, **dadurch gekennzeichnet, dass** die Funktionsfläche (32) des Funktionsteils (28) aus 15 000 bis 55 000, besonders bevorzugt aus 25 000 bis 35 000, Haftelementen (34) pro cm² Folienfläche gebildet ist.

7. Befestigungssystem nach einem der vorstehenden Ansprüche, **dadurch gekennzeichnet, dass** das folienartige Funktionsteil (28) aus einem Silikonmaterial besteht.

8. Befestigungssystem nach einem der vorstehenden Ansprüche, **dadurch gekennzeichnet, dass** das Funktionsteil (28) folienartig ausgebildet ist und auf seiner einen Folienseite die Funktionsfläche (32) mit den Mikrostrukturen aufweist und auf seiner gegenüberliegenden weiteren Folienseite eine Festlegemöglichkeit für weitere Komponenten (42) besitzt.

9. Befestigungssystem nach einem der vorstehenden Ansprüche in Verbindung mit Anspruch 3, **dadurch gekennzeichnet, dass** das flüssige, schnell aushärtende Auftragmittel jeweils einzeln oder in Kombination
- acrylat-
- silikon-
- polyurethan-
- kautschuk-
- lack-
- cellulose-
basiert ist.

10. Verkaufsset, zumindest bestehend aus mindestens einer Sprüheinrichtung (16) zum Aufträgen eines flüssigen, aushärtenden Auftrag-mittels und aus mindestens einem folienartigen Funktionsteil (28) mit einer Funktionsfläche (32) mit Mikrostrukturen.

11. Verfahren zum Anbringen eines Befestigungsmittels nach einem der Ansprüche 1 bis 9, vorzugsweise unter Verwendung eines Verkaufssets nach Anspruch 10 mit zumindest den folgenden Verfahrensschritten:
- Auftragen, insbesondere Aufsprühen, eines, vorzugsweise flüssigen, Auftragmittels auf eine Oberfläche (12),
- Vorzugsweise Aushärtenlassen des Auftragmittels, insbesondere des Sprühauftrages, unter Bildung einer glatten Anhaftfläche (26), und
- Anbringen eines folienartigen Funktionsteils (28) über Mikrostrukturen (34) der einen Funktionsfläche (32) an der Anhaftfläche (26) des ausgehärteten Auftrag mittels.
